# EUROPEAN PATENT SPECIFICATION

(11) **EP 4 010 408 B1**
(45) Date of publication and mention of the grant of the patent: **24.12.2025**
(21) Application number: 20761012.2
(22) Date of filing: 06.08.2020
(51) Int. Cl.: C08J 3/20, C08L 27/06, C08L 83/04, C08K 3/00, C08J 9/00

(54) **PVC FORMULATIONS COMPRISING HIGH MINERAL FILLER CONTENTS AND A HYDROXYL-FUNCTIONAL ORGANOPOLYSILOXANE**
PVC-ZUSAMMENSETZUNGEN MIT HOHEM INHALT AN MINERALFÜLLSTOFFEN UND EINEM HYDROXYL-FUNKTIONALEN ORGANOPOLYSILOXAN
FORMULATIONS DE PVC COMPRENANT UNE TENEUR EN CHARGE MINÉRALE ÉLEVÉE ET UN ORGANOPOLYSILOXANE À FONCTION HYDROXYLE

(30) Priority: 07.08.2019 US 201962883839 P
(43) Date of publication of application: 15.06.2022
(73) Proprietor: Rohm and Haas Company, Collegeville, PA 19426 (US); Dow Silicones Corporation, Midland, Michigan 48686 (US)
(72) Inventor: NERKAR, Manoj, Collegeville, Pennsylvania 19426 (US); CHORVATH, Igor, Midland, Michigan 48686-0994 (US); GUO, Hailan, Collegeville, Pennsylvania 19426 (US)
(74) Representative: Beck Greener LLP
(86) International application number: PCT/US2020/045121
(87) International publication number: WO 2021/026302

(56) References cited:
- EP-A1- 2 787 026
- WO-A1-2010/049532
- WO-A2-2010/049530
- CN-A- 103 788 409

## Description

### FIELD OF THE INVENTION

The present invention generally relates to a polyvinyl chloride (PVC) composition and, more specifically, to a PVC composition for preparing a polymer composite article, to methods of preparing the PVC composition and the polymer composite article therewith, and to the polymer composite article formed thereby.

EP 2 787 026 A1 discloses a process for the production of a composite polymer material that allows for the preparation of a composite polymer material with high filler content, which may be used as a masterbatch.

CN 103 788 409 A discloses a calcium carbonate filler, in particular to a wear-resistant surface modified calcium carbonate filler.

### DESCRIPTION OF THE RELATED ART

Polymer composite articles are known in the art and are utilized in various end use applications. Polymer composite articles are increasingly popular with consumers due to cost and desirable properties associated with polymer composite articles, including physical and mechanical properties.

In the PVC industry, it is common to include fillers in the composite articles. Fillers are relatively inexpensive and are often used to lower the cost. Such composite articles are typically produced by thoroughly mixing fillers and PVC to give a mixture. High levels of fillers, however, can adversely affect the properties of the composite articles. For example, high amounts of filler may affect critical properties such as density, percent (%) elongation, impact strength, surface finish, melt flow, melt viscosity, melt strength, and processability.

Due to the nature of PVC, it cannot be processed on its own. Other additives, such as stabilizers, processing aids, and lubricants are required to obtain processability and performance of the polymer. Typically, these additives are mixed in a high speed mixer/blender to make dry blends. High filler levels make it difficult to form uniform dry blends. The system often becomes too dusty and difficult to handle. The filler also tends to stick to the walls and blades of the mixer, resulting in less than the desired amount of filler in the blend. Sticking of the filler also increases the cleaning time of the equipment and may also increase contamination of the next batch.

Conventional, low cost, organic process aids generally suffer from the drawback of requiring high loading to achieve faster production speeds, thereby impacting cost and/or performance properties. In addition, many conventional process aids may negatively affect physical properties and reduce mechanical properties (impact resistance, flexural strength, flexural modulus) of the composite articles, especially at elevated use temperatures. Conventional process aids may also migrate from the polymer composite articles, thus negatively impacting one or more properties of the polymer composite articles over time, such as physical properties, appearance, feel, ability to overmold, ability to co-extrude, ability to adhere to the surface, ability to print the surface and ability to paint the surface of the polymer composite articles. In addition some of the organic process aids volatilize at higher application temperatures, which can lead to formation or bubbles and cracks in the polymer composite articles, which can compromise long term performance of these articles.

High filler levels also tend to increase the density of the polymer system. Increased density increases the weight of the final composite articles, which may in turn increase associated shipping costs. When foamed, high filler levels also inhibit expansion of the polymer.

High filler levels typically make the polymer system shear sensitive. These systems demonstrate higher shear thinning behavior.

While the use of inorganic fillers may increase char content, which improves smoke and flame properties, mechanical properties such as percent (%) elongation and impact strength are often diminished as a result.

Current PVC compositions require the sacrifice of at least one property for the benefit of another. For example, a PVC composition may be formulated to improve impact strength but would lower percent (%) elongation or it may improve surface finish but would lower throughput or it may provide the desired density but would affect other physical properties.

It would be desirable to provide a polymer system having a high filler content that addresses one or more of the problems above.

### BRIEF SUMMARY OF THE INVENTION

The present invention provides a PVC composition for preparing a polymer composite article. The composition comprises (A) a mineral filler in an amount of from 50 to 70 wt.%. The composition also comprises (B) a polyvinyl chloride polymer in an amount of from 25 to less than 50 wt.%. The amount of the (A) mineral is greater than the amount of the (B) polyvinyl chloride polymer. Further, the composition comprises (C) an organopolysiloxane in an amount of from greater than 0 to 5 wt.%; the (C) organopolysiloxane having at least one silicon-bonded hydroxyl group and a viscosity of from 1,000 to 60,000 mPa·s at 25 °C. The ranges for components (A)-(C) are based on the total weight of components (A), (B) and (C) in the composition.

A method of preparing the composition is also provided. The method of preparing the composition comprises combining the (A) mineral filler, the (B) polyvinyl chloride polymer, and the (C) organopolysiloxane, thereby preparing the composition.

Further, a method for preparing a polymer composite article is provided by the present invention. The method comprises preparing the polymer composite article from the PVC composition. In addition, a polymer composite article formed in accordance with the method is also provided.

### BRIEF DESCRIPTION OF THE DRAWINGS

FIGS. 1A-1C show a graph of the viscosity and shear rate for formulations according to embodiments of the present invention.
FIGS. 2 and 3 show optical microscopic images of formulations according to the present invention.
FIGS. 4A and 4B shows a graph of the Rabinowitsch correction requires for formulations according to the present invention.

### DETAILED DESCRIPTION OF THE INVENTION

The present invention provides a PVC composition for preparing a polymer composite article. The polymer composite article has excellent physical properties and is suitable for myriad end use applications, as described below. A method of preparing a polymer composite article and the polymer composite article formed thereby are also provided and described below.

The composition for preparing a polymer composite article comprises: (A) a mineral filler in an amount of from 50 to 70 wt.%; (B) a polyvinyl chloride polymer in an amount of from 25 to less than 50 wt.%, wherein the amount of the (A) mineral filler is greater than the amount of the (B) polyvinyl chloride polymer; and (C) an organopolysiloxane in an amount of from greater than 0 to 5 wt.%; each based on the total weight of components (A), (B) and (C) in the composition.

### Component (A) Mineral Filler

The composition comprises (A) a mineral filler. The (A) mineral filler may form a discontinuous phase in the composition for preparing the polymer composite article and the composite article so prepared.

The (A) mineral filler may be untreated, pretreated, or added in conjunction with an optional filler treating agent, which when so added may treat the (A) mineral filler in situ or prior to incorporation of the (A) mineral filler in the composition. When treated, the (A) mineral filler may be treated by any conventional filler treating agent known in the art. The (A) mineral filler may be a single filler or a combination of two or more fillers that differ in at least one property such as type of filler, method of preparation, treatment or surface chemistry, filler composition, filler shape, filler surface area, average particle size, and/or particle size distribution.

Preferably, the (A) mineral filler comprises at least 90 wt.% of the total weight of filler in the PVC composition, i.e., the PVC composition may comprise up to 10 wt.% of a non-mineral filler. More preferably, the (A) mineral filler comprises at least 95 wt.% of the total weight of filler in the PVC composition. Even more preferably, the filler in the PVC composition consists essentially of or consists of at least one mineral filler. As used herein, "consists essentially of" means that any filler other than a mineral filler present in the PVC composition does not negatively affect any of the physical properties of the PVC composition and/or the processability of the PVC composition. Preferably, the PVC composition comprises less than 5 wt.% of a lignocellulosic filler or an organic filler. More preferably, the PVC composition does not comprise a lignocellulosic filler or an organic filler.

The shape and dimensions of the (A) mineral filler is also not specifically restricted. For example, the (A) mineral filler may be spherical, rectangular, ovoid, irregular, and may be in the form of, for example, a powder, a fiber, a particle, and combinations thereof. Dimensions and shape are typically selected based on the type of the (A) mineral filler utilized, the selection of other components included within the composition, and the end use application of the polymer composite article formed therewith.

Non-limiting examples of mineral fillers that may function as extending or reinforcing fillers include quartz and/or crushed quartz, aluminum oxide, magnesium oxide, silica (e.g. fumed, ground, precipitated), hydrated magnesium silicate, magnesium carbonate, dolomite, silicone resin, wollastonite, soapstone, kaolinite, kaolin, mica muscovite, phlogopite, halloysite (hydrated alumina silicate), aluminum silicate, sodium aluminosilicate, glass (fiber, beads or particles, including recycled glass, e.g. from wind turbines or other sources), clay, magnetite, hematite, calcium carbonate such as precipitated, fumed, and/or ground calcium carbonate, calcium sulfate, barium sulfate, calcium metasilicate, zinc oxide, talc, diatomaceous earth, iron oxide, clays, mica, chalk, titanium dioxide (titania), zirconia, graphite, anthracite, lignite, magnesium oxide, magnesium hydroxide, magnesium oxysulfate fiber, aluminum trihydrate, aluminum oxyhydrate, pigments (e.g. titanium dioxide, non-hydrated, partially hydrated, or hydrated fluorides, chlorides, bromides, iodides, chromates, carbonates, hydroxides, phosphates, hydrogen phosphates, nitrates, oxides, and sulfates of sodium, potassium, magnesium, calcium, and barium); antimony pentoxide, antimony trioxide, beryllium oxide, chromium oxide, lithopone, a borate salt such as zinc borate, barium metaborate or aluminum borate, mixed metal oxides such as vermiculite, bentonite, pumice, perlite, fly ash, clay, and silica gel; pyrophyllite, sepiolite, zinc stannate, zinc sulphide, and combinations thereof. Alternatively the extending or reinforcing filler may be selected from the group consisting of calcium carbonate, talc and a combination thereof.

Extending fillers are known in the art and commercially available; such as a ground silica sold under the name MIN-U-SIL by U.S. Silica of Berkeley Springs, WV. Suitable precipitated calcium carbonates include Winnofil^{™} SPM from Solvay and Ultra-pflex^{™} and Ultra-pflex^{™} 100 from SMI.

The (A) mineral filler is present in the composition in an amount of from 50 to 70, alternatively from 50 to 65, and alternatively 52 to 60, weight percent based on the total weight of (A), (B), and (C) in the composition. All end points and subranges between 50 to 70 weight percent are included and disclosed herein. Alternatively, for certain applications, it is desirable to maximize the relative amount of the (A) mineral filler in the composition, which reduces overall cost thereof, so long as desirable properties of the polymer composite article formed therewith are maintained or obtained. One of skill in the art understands that the amount of the (A) mineral filler may be modified for this purpose, including a balance of cost and resulting properties, as well as the presence or absence of other optional components, as described below.

### (B) PVC Polymer

The composition further comprises (B) a PVC polymer. The PVC polymer may form all or a part of a continuous phase in the composition for preparing the polymer composite article and the composite article prepared therefrom. The selection of the (B) PVC polymer is typically a function of the desired end use application of the polymer composite article formed with the composition, as various polymers have different melting point temperatures (and/or glass transition temperatures) and physical/mechanical properties, as well as suitable or acceptable continuous use application temperatures. In certain embodiments, the (B) PVC polymer has a softening point temperature that is less than a degradation temperature of other components in the composition. In these embodiments, the (B) PVC polymer has softening point temperature of less than 250 °C, alternatively less than 225 °C, alternatively less than 200°C. The softening point temperature may also be referred to as the processing temperature. In at least one embodiment, the (B) PVC polymer has a softening point temperature ranging from 150 to 250°C, such as from 160 to 220°C or from 170 to 210°C. Preferably, the (B) PVC polymer is a powder.

Elastomers and/or rubbers can be added to or compounded with the (B) PVC polymer to modify or improve properties, such as impact strength. Preferably, the (B) PVC polymer comprises at least one acrylic processing additive. Additives may include those known in the art, such as the additives disclosed by Stevenson et al., Journal of Vinyl Technology, December 1993, Vol. 15, No. 4, pages 244-251.

In certain embodiments, the polymer in the PVC composition consists essentially of a PVC polymer. By consist essentially of, it is meant that the (B) PVC polymer can include one or more additional polymers other than a polyvinyl so long as such additional polymers can be processed along with the (B) PVC polymer to form the polymer composite article. When the (B) PVC polymer does not consist of a PVC polymer, the (B) PVC polymer typically includes a PVC polymer in an amount of at least 50, alternatively at least 60, alternatively at least 65, alternatively at least 70, alternatively at least 75, alternatively at least 80, alternatively at least 85, alternatively at least 90, alternatively at least 95, alternatively at least 96, alternatively at least 97, alternatively at least 98, alternatively at least 99, wt.% based on the total weight of the (B) PVC polymer utilized in the composition.

When the (B) PVC polymer comprises a polymer other than and in addition to a PVC, the (B) PVC polymer may further comprise at least one polymer that is fully or partially thermodynamically miscible with PVC. Such polymer include, but are not limited to, poly(methyl methacrylate) (PMMA), polyethylene oxide (PEO), thermoplastic polyurethane (TPU), polycaprolactone (CPL), and styrene-acrylonitrile resin (SAN). Other thermodynamically miscible polymers are known in the art and are disclosed, for example, Robeson, L. M. (1990), Miscible polymer blends containing poly(vinyl chloride). J. Vinyl Addit. Technol., 12: 89-94. The (B) PVC polymer may further comprise an elastomer. Non-limiting examples of elastomers include styrene-butadiene rubber, polyether urethane rubber, polyester urethane rubber, butyl rubber, nitrile rubber, chloroprene rubber (neoprene), polyacrylate rubber, ethylene acrylate rubber, ethylene-propylene rubber, ethylene-propylene-diene rubber, ethylene propylene diene monomer (EPDM), ethylene propylene rubber (EPR), fluorosilicone rubber, fluorocarbon rubber, perfluorinated elastomer, styrene butadiene rubber, chlorosulfonated polyethylene, polyisoprene rubber, polysulfide rubber, ethylene acrylate rubber, epichlorohydrine rubber, perfluoroelastomer (e.g. Kalrez^{™}), polysulfide rubber, chlorinated polyethylene (e.g. chlorinated polyethylene comprising up to 40 weight percent chlorine), and combinations thereof.

Regardless of the (B) PVC polymer utilized, the (B) PVC polymer can comprise virgin polymer and/or recycled polymer. The recycled polymer, if utilized, may be sourced from industrial production streams, as well as from post-industrial and/or post-consumer sources. The selection of the (B) PVC polymer, as well as any ratio of virgin polymer to recycled polymer, if utilized in concert, is typically a function of cost and desired properties of the polymer composite article formed therewith.

The amount of the (A) mineral filler is greater than the amount of the (B) PVC polymer in the PVC composition, i.e., the ratio of the (A) mineral filler to the (B) PVC polymer is greater than 1.

The (B) PVC polymer may be present in the composition in an amount of from 25 to less than 50, alternatively from 30 to less than 50, alternatively from 35 to less than 50, and alternatively from 40 to 48, weight percent based on the total weight of (A), (B), and (C) in the composition. In specific embodiments, it is desirable to minimize the relative amount of the (B) PVC polymer in the composition, which may reduce overall cost thereof depending on selection, so long as desirable properties of the polymer composite article formed therewith are maintained or obtained. One of skill in the art understands that the amount of the (B) PVC polymer may be modified for this purpose, including a balance of cost and resulting properties, as well as the presence or absence of other optional components, as described below.

### (C) Organopolysiloxane

The composition further comprises (C) an organopolysiloxane. The (C) organopolysiloxane has at least one silicon-bonded hydroxyl group. The (C) organopolysiloxane has a viscosity of from 1,000 to 60,000, alternatively from 1,000 to 50,000, alternatively from 2,000 to 50,000, mPa·s at 25°C. Viscosity is measured at 25°C at 0.1 to 50 RPM on a Brookfield DV-III cone & plate viscometer with #52 spindle. One skilled in the art would understand that as viscosity of the organopolysiloxane increases, RPM of the viscosity test method will decrease from 50 to 0.1 RPM.

Alternatively, in the (C) organopolysiloxane, the silicon-bonded OH groups may be present in an amount of at least 50 ppm based on the weight of the (C) organopolysiloxane. Alternatively, the silicon-bonded OH groups may be present in an amount of 50 ppm to 15,000 ppm; alternatively 50 ppm to 10,000 ppm; alternatively 2,500 ppm to 7,500 ppm; and alternatively 10,000 to 15,000 ppm, on the same basis. The silicon-bonded OH content may be measured by Fourier Transform Infra-Red (FTIR) spectroscopy.

The (C) organopolysiloxane may comprise two or more different organopolysiloxanes, which may be independently selected. Typically, the (C) organopolysiloxane serves as a process aid in the composition and the polymer composite article. Without wishing to be bound by theory, the (C) organopolysiloxane may be an internal and/or external process aid. However, the (C) organopolysiloxane may serve other purposes, in addition to or alternatively to serving as a process aid, e.g. to modify physical or mechanical properties of the composition and the polymer composite article.

Generally speaking, various advantages can be realized by the combination of the (A) mineral filler, the (B) PVC polymer, and the (C) organopolysiloxane. When the composition is mixed in an extruder, for example, combination of the (A) mineral filler, the (B) PVC polymer, and the (C) organopolysiloxane generally reduces a melt temperature of the composition in the extruder. The reduction in melt temperature refers to the temperature of the composition in the extruder and Brabender as opposed to the melting point temperature of any one individual component in the composition (and in the extruder). Importantly, this allows for processing of the composition at reduced temperatures, which provides myriad benefits, including cost and aesthetics. For example, certain fillers, such as lignocellulosic fillers, can char or degrade at certain elevated processing temperatures of the composition, typically required to make the composition flowable. Use of combination of the (A) mineral filler, the (B) PVC polymer, and the (C) organopolysiloxane allows for preparing the polymer composite article at a reduced temperature without degrading, charring or otherwise deleteriously impacting the (A) mineral filler and other aspects of the polymer composite article. Moreover, when the composition is mixed in an extruder, a torque of the extruder is generally reduced by combination of (A) mineral filler, the (B) PVC polymer, and the (C) organopolysiloxane. Reduced torque allows for greater output, which is particularly important from the perspective of production throughput.

The (C) organopolysiloxane may be linear, branched, partly branched, cyclic, resinous (i.e., have a three-dimensional network), or may comprise a combination of different structures. For example, the (C) organopolysiloxane may comprise any combination of M, D, T and/or Q siloxy units, so long as the (C) organopolysiloxane includes at least one silicon-bonded hydroxyl group. These siloxy units can be combined in various manners to form cyclic, linear, branched and/or resinous (three-dimensional networked) structures.

In certain embodiments, the (C) organopolysiloxane has the following average unit formula:

[R₃SiO_{1/2}]ₐ[R₂SiO_{2/2}]_{b}[RSiO_{3/2}]_{c}[SiO_{4/2}]_{d};

wherein each R is independently selected from OH and hydrocarbyl groups, with the proviso that in at least one molecule, at least one R is OH; 0 < a ≤ 0.99; 0 < b ≤ 0.99; 0 ≤ c ≤ 0.2; and 0 ≤ d ≤ 0.2, with the proviso that a+b+c+d=1.

Each R that is not OH may independently be linear, branched, cyclic, or combinations thereof. Cyclic hydrocarbyl groups encompass aryl groups as well as saturated or non-conjugated cyclic groups. Aryl groups may be monocyclic or polycyclic. Linear and branched hydrocarbyl groups may independently be saturated or unsaturated. One example of a combination of a linear and cyclic hydrocarbyl group is an aralkyl group. When R is not an aryl group, R is saturated, i.e., R is free from ethylenic unsaturation.

Hydrocarbyl groups may be exemplified by methyl, ethyl, propyl, isopropyl, butyl, isobutyl, t-butyl, pentyl, hexyl, cyclohexyl, heptyl, octyl, nonyl, decyl, or similar alkyl groups; and phenyl, tolyl, xylyl, naphthyl, or similar aryl groups; benzyl, phenethyl, or similar aralkyl groups.

The silicon-bonded OH group(s) may be present in any M, D, and/or T siloxy unit present in the (C) organopolysiloxane, and may be bonded to the same silicon atom (in the case of M and/or D siloxy units). The (C) organopolysiloxane may comprise, for example, as M siloxy units: (R₃SiO_{1/2}), (R₂(OH)SiO_{1/2}), (R(OH)₂SiO_{1/2}), and/or ((OH)₃SiO_{1/2}). The (C) organopolysiloxane may comprise, for example, as D siloxy units: (R₂SiO_{2/2}), (R(OH)SiO_{2/2}), and/or ((OH)₂SiO_{2/2}). The (C) organopolysiloxane may comprise, for example, as T siloxy units: (RSiO_{3/2}) and/or ((OH)SiO_{3/2}). Such siloxy units may be combined in any manner, optionally along with Q siloxy units, to give an organopolysiloxane having at least one silicon-bonded OH group.

The (C) organopolysiloxane is branched or resinous when the (C) organopolysiloxane includes T siloxy units and/or Q siloxy units. When the (C) organopolysiloxane is branched or resinous, the (C) organopolysiloxane is typically a copolymer including T siloxy units and/or Q siloxy units in combination with M siloxy units and/or D siloxy units. For example, (C) organopolysiloxane can be a DT resin, an MT resin, an MDT resin, a DTQ resin, an MTQ resin, an MDTQ resin, a DQ resin, an MQ resin, a DTQ resin, an MTQ resin, or an MDQ resin. Alternatively, in certain embodiments, the (C) organopolysiloxane is linear, in which case the (C) organopolysiloxane comprises D siloxy units in combination with M siloxy units.

In certain embodiments, the (C) organopolysiloxane has the following average unit formula:

[R¹₃₋ₙ(OH)ₙSiO_{1/2}]_{a'}[R¹₂₋ₘ(OH)ₘSiO_{2/2}]_{b'}[R¹SiO_{3/2}]_{d}SiO_{4/2}]_{d'};

wherein each R¹ is an independently selected hydrocarbyl group; n is 0, 1, 2, or 3, m is 0, 1 or 2, with the proviso that n and m are not simultaneously 0; 0 < a' < 1; 0 < b' < 1; 0 ≤ c' ≤ 0.1; and 0 ≤ d' ≤ 0.1, with the proviso that a'+b'+c'+d'=1. In this average unit formula, the at least one silicon-bonded OH group is present in the M and/or D siloxy units of the (C) organopolysiloxane.

In specific embodiments, the (C) organopolysiloxane is substantially linear, alternatively linear. In these embodiments, the (C) organopolysiloxane is substantially free, alternatively free, from T siloxy and/or Q siloxy units. For example, in these specific embodiments, the (C) organopolysiloxane may have the following average unit formula (I):

[R¹₃₋ₙ(OH)ₙSiO_{1/2}]_{a"}[R¹₂₋ₘ(O^{H})ₘSiO_{2/2}]_{b"}

wherein each R¹ is an independently selected hydrocarbyl group; n is 0, 1, 2, or 3, m is 0, 1 or 2, with the proviso that n and m are not simultaneously 0; 0 < a" < 1; 0 < b" < 1; with the proviso that a"+b"=1. In certain embodiments, n is 1, 2, or 3. In these or other embodiments, m is 0 such that the silicon-bonded OH group(s) are located in the M siloxy units and thus are terminal. Given the viscosity of the (C) organopolysiloxane, as introduced above and described below, typically b">a". Each R¹ is typically methyl.

When the (C) organopolysiloxane is substantially linear, alternatively linear, and includes terminal silicon-bonded OH group(s), the (C) organopolysiloxane may have the following average unit formula (II):

R¹₃₋ₓ(OH)ₓSiO[SiR¹₂O]_{c"}Si(OH)_{y}R¹_{3-y}

wherein each R¹ is an independently selected hydrocarbyl group; x is 0, 1, 2, or 3, y is 0, 1, 2, or 3, with the proviso that x and y are not simultaneously 0; and c" has a value sufficient to provide the desired viscosity of the (C) organopolysiloxane, alternatively c" is from 60 to 1,200, alternatively 100 to 1,200. In certain embodiments, x is 1, 2, or 3 and y is 1, 2, or 3. Subscript c" relates to the number of repeating D units and the degree of polymerization (DP) of the (C) organopolysiloxane. As understood in the art, both the selection of R¹ and the DP impact viscosity of the (C) organopolysiloxane.

Regardless of the (C) organopolysiloxane utilized, the (C) organopolysiloxane has a viscosity of at least 1,000 mPa·s measured at 25°C at RPM ranging from 0.1 to 50 on a Brookfield DV-III cone & plate viscometer with #52 spindle. According to the invention, the (C) organopolysiloxane has a viscosity of from 1,000 to 60,000, alternatively from 1,000 to 50,000, alternatively from 2,000 to 50,000, mPa·s at 25 °C tested under the conditions outlined above.

The (C) organopolysiloxane is utilized in an amount of from greater than 0 to 5, alternatively from 0.05 to 3, alternatively from 0.1 to 2.5, and alternatively from 0.25 to 2.0, weight percent based on the total weight of (A), (B), and (C) in the composition.

The (C) organopolysiloxane may be utilized in a neat (unadulterated) form but alternatively may be provided in any other suitable form, it may for example be provided in a diluted liquid form in combination with a carrier vehicle or alternatively may be provided in a solid form, such as a pellet form (e.g., blended with the PVC polymer and pelletized) or as a powder (e.g., blended with a filler). In certain embodiments, the (C) organopolysiloxane is a liquid at 25 °C.

In certain embodiments, in addition to components (A) mineral filler, (B) PVC polymer, and the (C) organopolysiloxane, the composition for preparing the polymer composite article as described above further comprises one or more additives selected from a colorant (e.g., pigment and/or dye), a blowing agent (e.g., chemical and/or physical), a UV and/or light stabilizer, a process aid, a preservative, a biocide (e.g., fungicide, herbicide, pesticide, antimicrobial), a flame retardant and/or smoke suppressant, an impact modifier, a heat stabilizer, and a lubricant. These components are known in the art and can be used according to conventional practice. Each additive, if utilized, may be present in the composition in an amount of from greater than 0 to 30 weight percent based on the total weight of the composition. The composition may also include other optional additives, as known in the art. Such additives are described, for example, in Walker, Benjamin M., and Charles P. Rader, eds. Handbook of thermoplastic elastomers. New York: Van Nostrand Reinhold, 1979; Murphy, John, ed. Additives for plastics handbook. Elsevier, 2001.

A method for preparing a polymer composite article is also provided. The method comprises preparing the polymer composite article from the composition. In certain embodiments, the method further comprises forming the composition. The composition is formed by combining at least component the (A) mineral filler, the (B) PVC polymer, and the (C) organopolysiloxane, along with any optional components present in the composition.

The components of the composition may be combined in any order and via any suitable manner. In certain embodiments, for example, the (B) PVC polymer may be melted prior to, during, and/or after formation of the composition. For example, the (B) PVC polymer may be heated prior to and/or during combining the components such that the (A) mineral filler and the (C) organopolysiloxane are combined with a melted form of the (B) PVC polymer. The (A) mineral filler and the (C) organopolysiloxane may be combined with the melted form of the (B) PVC polymer in any order, e.g. individually, sequentially, together, or simultaneously. Alternatively, however, the (B) PVC polymer may be combined with the (A) mineral filler and the (C) organopolysiloxane prior to heating or melting the (B) polymer such that the (B) PVC polymer is in solid and unmelted or unsoftened form when preparing the composition. Alternatively, the (A) mineral filler and the (C) organopolysiloxane may be combined and heated, then added to the (B) PVC polymer in solid or liquid form when preparing the composition.

Preferably, the (A) mineral filler, the (B) PVC polymer, and the (C) organopolysiloxane are added simultaneously.

A melting point temperature (or glass transition temperature) of the (B) PVC polymer is typically a function of the (B) PVC polymer utilized. For example, certain species of polymers have different melting point temperatures than other species of polymers. In certain embodiments, the (B) PVC polymer is heated before, during, and/or after formation of the composition to a temperature that is greater than the melting point temperature of the (B) PVC polymer, e.g. 10 to 90, alternatively 10 to 40, °C higher than the melting point temperature of the (B) PVC polymer. This ensures melting rather than mere softening of the (B) PVC polymer. Alternatively, lower temperatures may be utilized in combination with shear or mixing to ensure softening and/or melting of the (B) PVC polymer.

The composition for preparing the polymer composite article may be formed under mixing or shear, e.g. with suitable mixing equipment. For example, the composition may be formed in a vessel equipped with an agitator and/or mixing blades. The vessel may be, for example, an internal mixer, such as a Banbury, Sigma (Z) Blade, or Cavity Transfer style mixer. Alternatively or in addition, the composition may be formed in or processed by an extruder, which may be any extruder, e.g. a single screw extruder with rotational and/or reciprocating (co-kneader) screws, as well as multi-screw devices comprising two or more screws, which may be aligned tangentially or partially/fully intermeshing, revolving in either a co- or counter-rotational direction. Alternatively, a conical extruder may be used for forming the composition described herein.

As introduced above, the method also comprises preparing the polymer composite article from the composition for preparing the polymer composite article. The composition may be formed, e.g. in the vessel, and subsequently removed from the vessel to form the polymer composite article with separate equipment. Alternatively, the same equipment may be utilized to prepare the composition and subsequently form the polymer composite article. For example, the composition may be prepared and/or mixed in an extruder, and the extruder may be utilized to prepare the polymer composite article with the composition. Alternatively, the polymer composite article may be formed via molding, e.g. with a compression, injection or transfer molding process. The composition may be formed in situ in the mold or formed independently and disposed in the mold once formed. Alternatively still, the polymeric composite article may be a film. In such embodiments, the composition can be formed or disposed in a vessel, optionally under mixing at an elevated temperature, and disposed in or on equipment to prepare the film from the composition. Such equipment and techniques for preparing films from compositions, particularly those including thermoplastics like the (B) PVC polymer of the composition, are well known in the art.

In certain embodiments, preparing the polymer composite article from the composition further comprises forming the composition into a desired shape. The desired shape depends on end use applications of the polymer composite article. One of skill in the art understands how dies for extrusion and molds for molding may be selected and created based on the desired shape of the polymer composite article.

In certain embodiments, the method is performed continuously or semi-continuously in an extruder, such as a twin screw extruder (in which the screws are concurrently rotated, partially or fully intermeshing, alternatively counter rotated aligned either tangentially or partially or fully intermeshing). In one embodiment, the (C) organopolysiloxane is disposed in the extruder concurrently with the (A) mineral filler and the (B) PVC polymer. Alternatively, the (C) organopolysiloxane may be disposed in the extruder after melting the (B) PVC polymer and before adding the (A) mineral filler. Alternatively, the (C) organopolysiloxane may be disposed in the extruder after the (A) mineral filler and the (B) PVC polymer and before the polymer composite article exits the extruder. Alternatively, the (A) mineral filler may be disposed in the extruder concurrently with the (C) organopolysiloxane, where they are heated to effect surface treatment of the (A) mineral filler with the (C) organopolysiloxane, then the (B) PVC polymer is disposed in the extruder to give a mixture and the temperature increased to a temperature suitable for compounding the mixture and forming the polymer composite article. The extruder may have one or more zones, such as 1 to 3, or 3 to 8, or 1 to 12, zones, where starting materials can be added. The zones may be heated at different temperatures.

The polymer composite article of the invention is not limited and may be customized for myriad end use applications and industries. By way of example only, the polymer composite article may be utilized in or as tubing; piping; hosing; an insulating (e.g. thermally and/or electrically insulating) article; automotive components or applications, including interior components, e.g. floor mats; consumer products and applications, industrial or commercial products and applications, aerospace products and applications, transportation products and applications, aircraft products and applications, electronics products and applications, residential or commercial building and construction products and applications, e.g. decking, railing, siding, fencing, window framing, flooring, tiles and skirting.

The invention has been described in an illustrative manner, and it is to be understood that the terminology which has been used is intended to be in the nature of words of description rather than of limitation. Obviously, many modifications and variations of the present invention are possible in light of the above teachings. The invention may be practiced otherwise than as specifically described.

### Industrial Applicability

Without wishing to be bound by theory, it is thought that the combination of (A) mineral filler, (B) PVC polymer, and (C) organopolysiloxane may provide one or more benefits to the polymer composites and/or processes for making them described herein. These include:
Decreased density of the foamed polymer composition; leading to lower cost;
Higher expansion of foamed polymer composition, resulting in thicker products at same blowing agent and processing aid loading level, efficient, cost effective formulation;
Better mixing through lower levels of dust and/or sticking of the filler to blender and blades, easy cleaning of blender;
Improved melt strength leading to robust processing, maximize expansion, maximum gas containment;
Increased char content resulting in better flame retardant and smoke suppressant performance;
Improved tribological properties, better wear resistance
Lower shear thinning leading to wider processing window;
Improved cell structure in foamed articles;
Lower torque during compounding can lead to lower power consumption for processing and it can enable higher throughput to improve production yield;
Increased compounding through put and or lower energy consumption;
Better filler dispersion and reduced glass fiber breakup (if glass fibers are used) during compounding and molding;
Ability to mold thinner walls because of improve melt flow;
Ability to include high filler loadings leading to cost saving;
Less reject rates during demolding;
Better surface quality and/or finish which can be a challenge at higher filler level;
Improved elongation irrespective of higher filler loading
Improved impact strength irrespective of higher filler loading
Improved fusion characteristic,
Maintains or improves critical properties even at higher filler loading, resulting in better performance, processing while lowering compound cost
Improved melt rheology resulting in less shear susceptible compound providing robust processing
Improved hydrophobicity;
Ability to utilize a larger proportion of recycled polymers or different grades; and/or
Enabling additives that improve strength and other properties, such as improved modulus and stiffness.

### Examples

The exemplary polyvinyl chloride formulations were prepared by adding the materials in Table 1 sequentially. The dry blends were prepared by adding the PVC at room temperature to a Gunther Papenmeier/Welex blender, ramping the power to 15A, adding the TM 181 at 125°F, adding the lubricant package including siloxane at 150°F, adding the acrylic processing aids at 170°F, adding TiO2 at 190°F, CaCO3 at 195°F. After the powder blended was cooled to room temperature.

**Table 1:**

| | Control | Comp. A1 | Comp. A2 | Comp. A3 | Comp. B1 | B2 | B3 | Comp. C1 | C2 | C3 |
|---|---|---|---|---|---|---|---|---|---|---|
| PVC¹ | 100 | 100 | 100 | 100 | 100 | 100 | 100 | 100 | 100 | 100 |
| Methyl Tin Mercaptide² | 1.5 | 1.5 | 1.5 | 1.5 | 1.5 | 1.5 | 1.5 | 1.5 | 1.5 | 1.5 |
| Polysiloxane³ | 0 | 0 | 0 | 0 | 1 | 1 | 1 | 2 | 2 | 2 |
| Internal Lubricant⁴ | 1.9 | 1.9 | 1.9 | 1.9 | 1.9 | 1.9 | 1.9 | 1.9 | 1.9 | 1.9 |
| External Lubricant⁵ | 1 | 1 | 1 | 1 | 1 | 1 | 1 | 1 | 1 | 1 |
| Foam Processing Aids⁶ | 0 | 12 | 12 | 12 | 12 | 12 | 12 | 12 | 12 | 12 |
| Lubricating Processing Aids⁷ | 1 | 1 | 1 | 1 | 1 | 1 | 1 | 1 | 1 | 1 |
| Mineral Filler⁸ | 100 | 100 | 120 | 140 | 100 | 120 | 140 | 100 | 120 | 140 |
| Blowing Agent⁹ | 1.25 | 1.25 | 1.25 | 1.25 | 1.25 | 1.25 | 1.25 | 1.25 | 1.25 | 1.25 |
| Total | 206.65 | 218.65 | 238.65 | 258.65 | 219.65 | 239.65 | 259.65 | 220.65 | 240.65 | 260.65 |

| | | | | | | | | | | |
|---|---|---|---|---|---|---|---|---|---|---|
| ¹FORMOLON^{®} 622 from Formosa having an inherent viscosity of 0.91 as measured in accordance with ASTM D-5225 and a bulk density of 0.52 g/cm³ as measured in accordance with ASTM D-1895 ²ADVASTAB^{®} TM 181 from PMC Vinyl Additives ³Hydroxy terminated siloxane with a viscosity of 13,500 cst at 25 °C ⁴Internal lubricant comprises a mixture of 1 phr LD 10 calcium stearate from Norac and 0.9 phr F1010 from PMC Vinyl Additives ⁵External lubricant comprises 0.5 phr Paraffin Wax 165F from Amerilube and 0.5 AC629A from Honeywell ⁶PARALOID^{™} SC 467 from The Dow Chemical Company ⁷PARALOID^{TM} K-175 from The Dow Chemical Company ⁸MICRO-WHITE^{™} 100 calcium carbonate from Imerys Carbonates ⁹FICEL^{®} Extend 73 from Hughes Polymer Additives Corp. Comp. - Comparative Examples | | | | | | | | | | |

The compositions of Table 1 were milled at 170 °C for 5 minutes on an electric Collin Roll mill with a 0.3 mm gap to give a milled sheet from each composition, then the milled sheet was compression molded to 3.2 mm thick plaque at 175 °C. Samples were cut for notched Izod impact strength (measured in accordance with ASTM D256), tensile strength (ASTM D 638) and Heat Distortion Temperature (ASTM D648). For density, expansion and processing condition studies foam rods were extruded using a lab twin screw extruder RS 5000 from Polylab, with a 4.78 mm rod die. The extrusion temperature setting was: 175C/185C/190C/160C (die) with screw speed 60 RPM. Time to floor was reported as a time melt/rod took to reach floor from die. Fusion study was done on Brabender Intelli Torque 7150 at 190C, 60 rpm, 7 min, 74 grams for 100 PHR CaCO3, 76 grams for 120 PHR CaCO3, 78 grams for 140 PHR CaCO3. Material from the Brabender was pressed into a flat plaque which was cut into pieces to feed the capillary of rheometer to provide melt viscosity measurement at 190°C. Thermogravimetric analysis (TGA) was done on a molded plaque from 50-800°C with ramp rate of 20°C/min. The samples according to the present invention had a visually improved surface finish. The results from the analyses are provided in the Tables below.

**Table 2:**

| Sample | Density (g/cm³) | Time to Floor (s) | Expansion (%) | HDT (°C) |
|---|---|---|---|---|
| A1 | 0.55 | 54 | 723 | 61.3 |
| A2 | 0.71 | 58 | 600 | 62.2 |
| A3 | 0.64 | 69 | 565 | 62.7 |
| B1 | 0.48 | 65 | 759 | 62.6 |
| B2 | 0.52 | 63 | 680 | 62.1 |
| B3 | 0.6 | 63 | 554 | 62.5 |
| C1 | 0.5 | 65 | 756 | 62.1 |
| C2 | 0.55 | 68 | 631 | 62.5 |
| C3 | 0.64 | 69 | 507 | 62.1 |

As seen in Table 2 above, samples comprising the combination of high filler level and polysiloxane surprisingly exhibited lower densities compared to samples without the polysiloxane. Additionally, the higher time to floor values indicate that the formulations according to the present invention exhibited improved melt strength even with higher filler loading. The time to floor value is a measure of the time an extrudate takes to reach the floor when it exits from a die. Formulations with poor melt strength fall on their own weight and take less time to reach the floor. The inventive formulations also surprisingly exhibited an improved or comparable expansion. Generally increased filler levels result in lower expansion, but the inventive compositions actually demonstrated an improved or comparable expansion. The inventive formulations also maintained and/or provided marginal improvement in heat distortion temperature (HDT). The Control exhibited an HDT of 63.4°C.

**Table 3:**

| Sample | Fusion Time (s) | Fusion Torque (M*g) | Fusion Temp (°C) | Equilibrium Torque (M*g) | Equilibrium Temp (°C) |
|---|---|---|---|---|---|
| A1 | 70 | 4484 | 190 | 2709 | 215 |
| A2 | 58 | 4614 | 185 | 2764 | 216 |
| A3 | 58 | 4879 | 188 | 2886 | 217 |
| B1 | 102 | 3724 | 195 | 2546 | 214 |
| B2 | 94 | 3938 | 193 | 2629 | 213 |
| B3 | 70 | 4254 | 186 | 2754 | 213 |
| C1 | 112 | 3379 | 198 | 2549 | 211 |
| C2 | 98 | 3513 | 196 | 2547 | 213 |
| C3 | 64 | 3679 | 185 | 2580 | 213 |

Typically, higher level of filler increases fusion and equilibrium torque making processing harder. The formulations according to the present invention maintained the torques even with increased filler levels.

**Table 4:**

| Sample | Torque (M*g) | Die Pressure (PSI) | Barrel Pressure (PSI) | Rate (g/30 s) |
|---|---|---|---|---|
| A1 | 3891 | 1818 | 2372 | 26 |
| A2 | 3374 | 1731 | 2303 | 30.5 |
| A3 | 3269 | 1763 | 2349 | 27.74 |
| B1 | 3330 | 1699 | 2246 | 32.68 |
| B2 | 3411 | 1699 | 2321 | 31.51 |
| B3 | 3302 | 1719 | 2326 | 26.5 |
| C1 | 3423 | 1763 | 2263 | 32.4. |
| C2 | 3357 | 1745 | 2309 | 29.99 |
| C3 | 3302 | 1824 | 2378 | 27.63 |

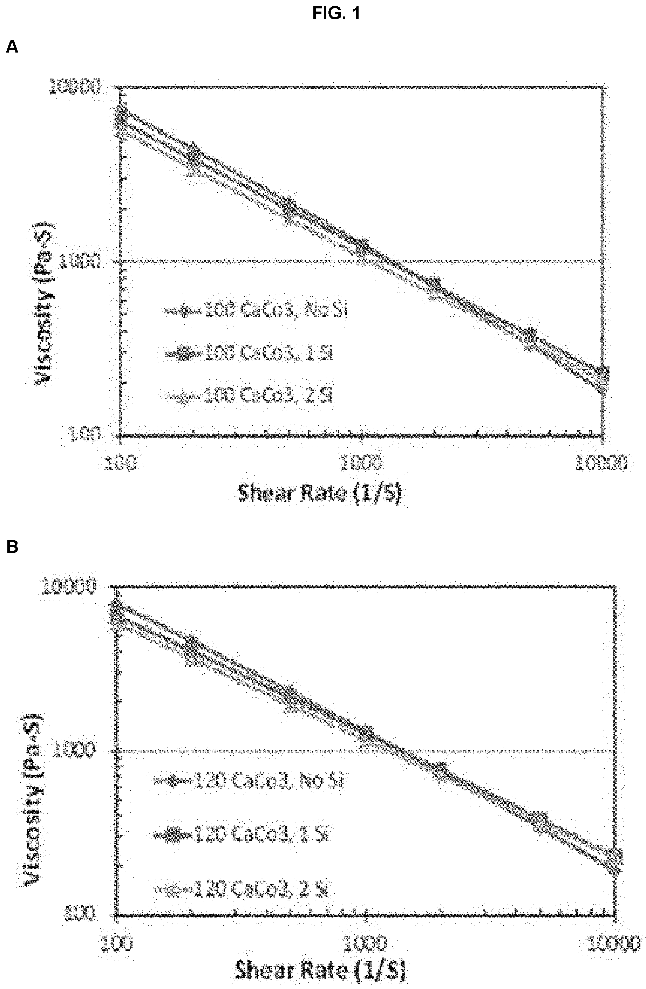

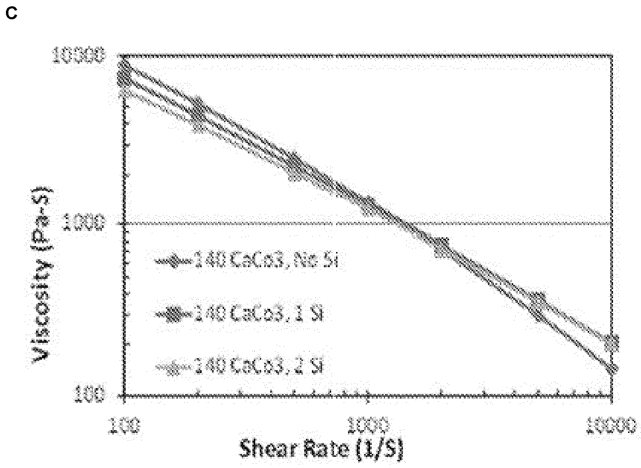

As shown in Table 4 above, no significant change was observed in torques, pressure, melt temperature, and throughput. Therefore, no change would be required during processing at a manufacturing site. As shown in FIGS. 1A to 1C, the formulation maintained melt viscosity at higher filler level. Typically, higher filler levels increase melt viscosity, which can result in higher torques and pressure limiting overall production yield. High melt viscosity can also limit throughput and flow and affect the ability to fill thin walls. Formulations without siloxane showed significant shear thinning at higher shear rate, resulting in very low viscosity which can also affect processing and needs changes in processing conditions and might also affect product quality such as cell structure, expansion and surface finish. The formulation with siloxane minimized shear thinning to match original (at low filler level) resulting in no change in rheology while adding more filler.

**Table 5:**

| Sample | Residue (%) | Increase in Char (%) |
|---|---|---|
| A2 | 39.0 | - |
| B2 | 42.7 | 3.6 |
| C2 | 44.5 | 5.5 |

As seen in Table 5, the inventive formulations result in increased char content, which can result in improved smoke suppression and flame retardation.

**Table 6:**

| Sample | Contact Angle (°) | Break Elongation (%) | Notched Izod Impact (ft-lb/in) | Modulus (x 1000 psi) |
|---|---|---|---|---|
| A1 | 94 | 6.7 (3.1) | 7 (2.4) | 242 (3) |
| A2 | 94 | 7.1 (1.1) | 5 (0.4) | 260 (7) |
| A3 | 94 | 4.1 (0.9) | 4.5 (0.9) | 277 (10) |
| B1 | 94 | 24.6 (2.9) | 7.2 (2.6) | 210 (1) |
| B2 | 94 | 13 (2.2) | 7.2 (1) | 250 (46) |
| B3 | 94 | 5.3 (1.7) | 3.3 (1.2) | 233 (10) |
| C1 | 94 | 24.2 (5.5) | 15.7 (1.9) | 215 (24) |
| C2 | 94 | 17.8 (1.4) | 7.6 (1.2) | 209 (4) |
| C3 | 94 | 8.6 (4.7) | 5.2 (1.2) | 227 (14) |

As shown in Table 6, the formulations according to the present invention maintained their surface energy. Change in surface energy can affect printability of the surface. Surface energy is also critical for multilayer structures because it can affect lamination and layer-to-layer adhesion. Thus, the formulations according to the present invention maintained their processing and surface energy even at high filler levels.

Table 6 also shows that the formulations according to the present invention showed improvement in percent elongation even at higher filler levels. Higher levels of necking were observed in the formulation according to the present invention. Izod impact strength was also improved and elastic modulus was maintained.

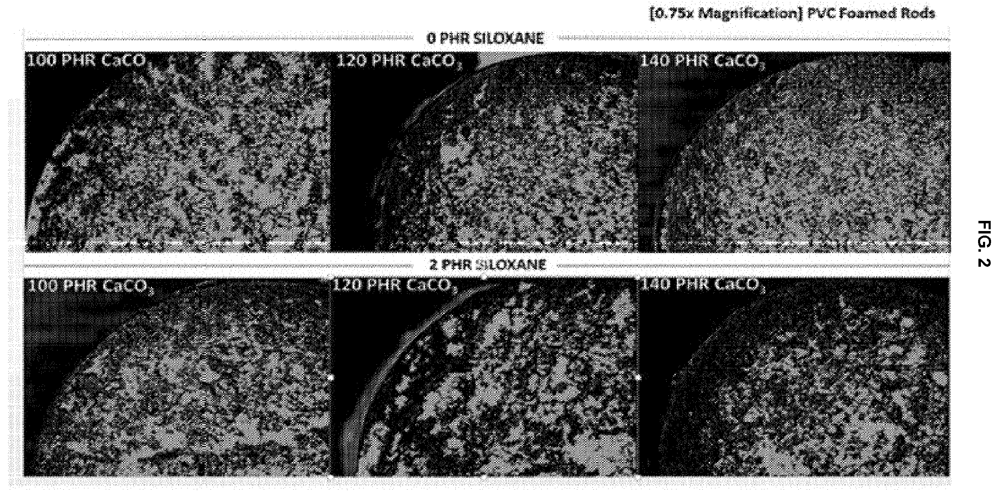

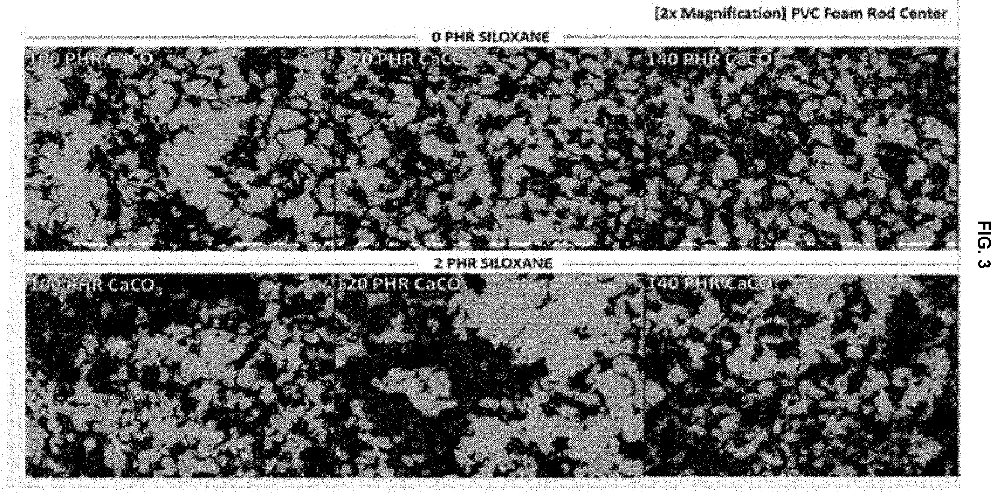

Cell structure analysis was done by optical microscopic images. As shown in FIGS. 2 and 3, the formulations according to the present invention exhibited improved cell structure. The optical microscopic images show no rupture or collapsing of cells which means the formulations allow gas generated by blowing agents to be held.

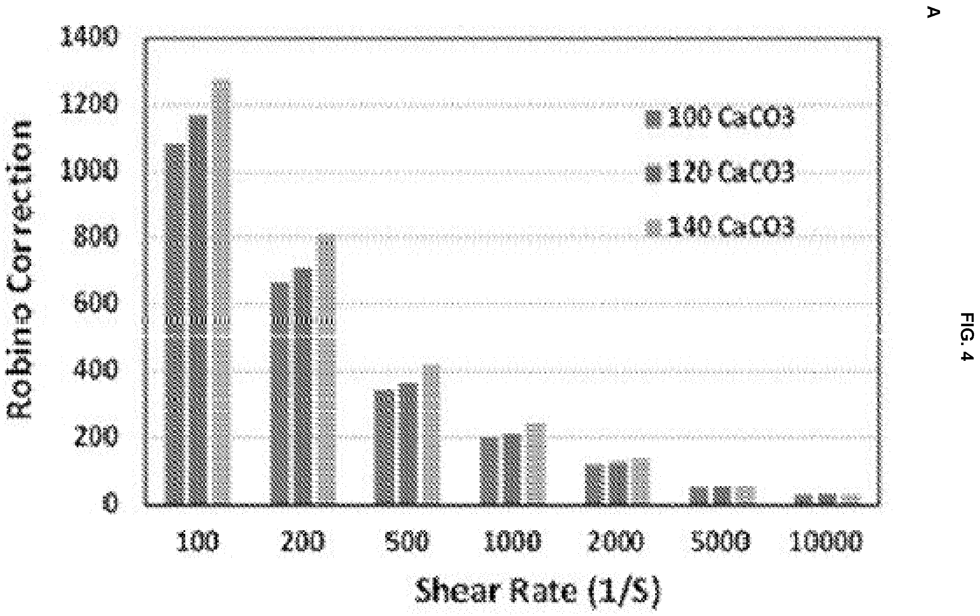

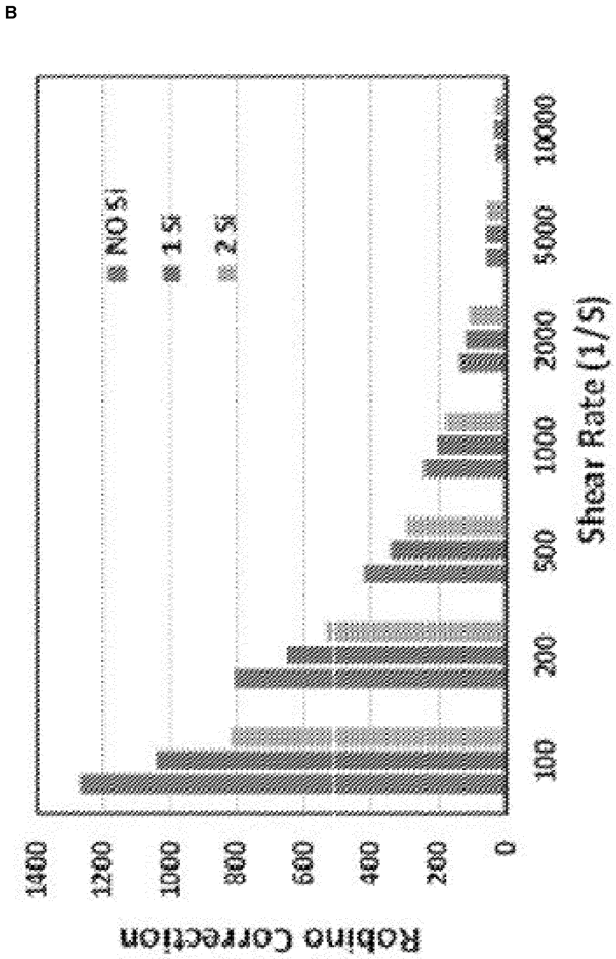

Tribological evaluation was done on the Anton-Paar MCR 502 equipped with ball-on-3 plate fixtures for tribology measurements. Formulations according to the present invention improved tribological properties by lowering coefficient of friction at room temperature and also at high temperature during melt processing. As shown in FIGS. 4A and 4B, formulations according to the present invention having higher polysiloxane content require lower Rabinowitsch correction that indicate different wall slippage.

### Definitions and Usage of Terms

Unless otherwise indicated by the context of the specification, all amounts, ratios and percentages are by weight, and all test methods are current as of the filing date of this disclosure. The articles "a", "an" and "the" each refer to one or more. It is to be understood that particular compounds, compositions or methods described in the detailed description, may vary between particular embodiments which fall within the scope of the appended claims.

Further, any ranges and subranges relied upon in describing various embodiments of the present invention independently and collectively fall within the scope of the appended claims, and are understood to describe and contemplate all ranges including whole and/or fractional values therein, even if such values are not expressly written herein.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer. Trace amounts of impurities may be incorporated into and/or within the polymer.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.

## Claims

1. A polyvinyl chloride composition for preparing a polymer composite article, said composition comprising:
(A) a mineral filler in an amount of from 50 to 70 wt.%;
(B) a polyvinyl chloride polymer in an amount of from 25 to less than 50 wt.%, wherein the amount of the (A) mineral filler is greater than the amount of the (B) polyvinyl chloride polymer; and
(C) an organopolysiloxane in an amount of from greater than 0 to 5 wt.%; the (C) organopolysiloxane having at least one silicon-bonded hydroxyl group and a viscosity of from 1,000 to 60,000 mPa·s at 25 °C, wherein the viscosity is measured at 25 °C at RPM ranging from 0.1 to 50 on a Brookfield DV-III cone & plate viscometer with a #52 spindle;
each based on the total weight of components (A), (B) and (C) in said composition.

2. The composition of claim 1, wherein: (i) said (C) organopolysiloxane is present as a liquid at 25 °C; (ii) said (C) organopolysiloxane has a viscosity of from 2,000 to 50,000 mPa·s at 25 °C; or (iii) a combination of (i) and (ii).

3. The composition of claim 1 or 2, wherein said (C) organopolysiloxane has the following average unit formula:
[R1₃₋ₙ(OH)ₙSiO_{1/2}]_{a'}[R¹₂₋ₘ(OH)ₘSiO_{2/2}]_{b'}[R¹SiO_{3/2}]_{d}SiO_{4/2}]_{d'};
wherein each R¹ is an independently selected hydrocarbyl group; n is 0, 1, 2, or 3, m is 0, 1 or 2, with the proviso that n and m are not simultaneously 0; 0 < a' < 1; 0 < b' < 1; 0 ≤ c' ≤ 0.1; and 0 ≤ d' ≤ 0.1, with the proviso that a'+b'+c'+d'=1.

4. The composition of claim 1 or 2, wherein said (C) organopolysiloxane has the following average unit formula (I) or (II):
[R¹₃₋ₙ(OH)ₙSiO_{1/2}]_{a"}[R¹₂₋ₘ(O^{H})ₘSiO_{2/2}]_{b"} (I)
wherein each R¹ is an independently selected hydrocarbyl group; n is 0, 1, 2, or 3, m is 0, 1 or 2, with the proviso that n and m are not simultaneously 0; 0 < a" < 1; 0 < b" < 1; with the proviso that a"+b"=1; or
R¹₃₋ₓ(OH)ₓSiO[SiR¹₂O]_{c"}Si(OH)_{y}R¹_{3-y} (II)
wherein each R¹ is an independently selected hydrocarbyl group; x is 0, 1, 2, or 3, y is 0, 1, 2, or 3, with the proviso that x and y are not simultaneously 0; and c" is from 60 to 1,200.

5. The composition of any one preceding claim, wherein: said (C) organopolysiloxane is present in an amount of from 0.1 to 2.5 wt.%.

6. The composition of any one preceding claim, wherein the mineral filler is selected from calcium carbonate, talc, and combinations thereof.

7. The composition of any one preceding claim, further comprising one or more additives selected from a colorant, a blowing agent, a UV and/or light stabilizer, a process aid, a preservative, a biocide, a flame retardant and/or smoke suppressant, an impact modifier; a heat stabilizer, and a lubricant.

8. A method of preparing the composition of any one of claims 1-7, said method comprising:
combining (A) said mineral filler, (B) said polyvinyl chloride polymer, and (C) said organopolysiloxane, thereby preparing the composition.

9. A method of preparing a polymer composite article, said method comprising:
preparing the polymer composite article from the composition of any one of claims 1-7.

10. The method of claim 9, wherein the method comprises:
combining the (A) mineral filler, the (B) polyvinyl chloride polymer, and the (C) organopolysiloxane at an elevated temperature under mixing to give a flowable mixture; and
forming the polymer composite article from the flowable mixture.

11. The method of claim 10, wherein: (i) the (C) organopolysiloxane is a liquid when combining the flowable mixture with the (C) organopolysiloxane.

12. The method of claim anyone of claims 9-11, wherein: (i) preparing the polymer composite article from the composition further comprises forming the composition into a desired shape; (ii) preparing the polymer composite article from the composition comprises extruding the composition; (iii) preparing the polymer composite article from the composition comprises molding the composition; or (iv) any combinations of (i) to (iii).

13. The method of any one of claims 9-12 carried out in an extruder, wherein: (i) an extrusion processing temperature of the composition in the extruder is reduced as compared to an extrusion processing temperature of a mixture of the (A) mineral filler and the (B) polyvinyl chloride polymer without the (C) organopolysiloxane; and/or (ii) a torque of the extruder is reduced when mixing the composition as compared to a torque of the extruder when extruding a mixture of the (A) filler and the (B) polymer without the (C) organopolysiloxane.

14. A polymer composite article prepared by the method of any one of claims 8-13.

15. The polymer composite article of claim 14, wherein the article is selected from the group consisting of decking, railing, siding, fencing, window framing, flooring, tiles, and skirting.

## Patentansprüche

1. Polyvinylchloridzusammensetzung zum Herstellen eines Polymerkompositerzeugnisses, die Zusammensetzung umfassend:
(A) einen Mineralfüllstoff in einer Menge von 50 bis 70 Gew.-%;
(B) ein Polyvinylchloridpolymer in einer Menge von 25 bis weniger als 50 Gew.-%, wobei die Menge des (A) Mineralfüllstoffs größer als die Menge des (B) Polyvinylchloridpolymers ist; und
(C) ein Organopolysiloxan in einer Menge von größer als 0 bis 5 Gew.-%; wobei das (C) Organopolysiloxan mindestens eine siliciumgebundene Hydroxylgruppe und eine Viskosität von 1.000 bis 60.000 mPa s bei 25 °C aufweist, wobei die Viskosität bei 25 °C bei U/min, die von 0,1 bis 50 reichen, auf einem Brookfield DV-III Platte-Kegel-Viskosimeter mit einer #52-Spindel gemessen wird;
jeweils basierend auf dem Gesamtgewicht von Komponenten (A), (B) und (C) in der Zusammensetzung.

2. Zusammensetzung nach Anspruch 1, wobei: (i) das (C) Organopolysiloxan als eine Flüssigkeit bei 25 °C vorhanden ist; (ii) das (C) Organopolysiloxan eine Viskosität von 2.000 bis 50.000 mPa s bei 25 °C aufweist; oder (iii) eine Kombination von (i) und (ii).

3. Zusammensetzung nach Anspruch 1 oder 2, wobei das (C) Organopolysiloxan die folgende durchschnittliche Einheitsformel aufweist:
[R¹₃₋ₙ(OH)ₙSiO_{1/2}]_{a'}[R¹₂₋ₘ(OH)ₘSiO_{2/2}]_{b'}[R¹SiO_{3/2}]_{c'}SiO_{4/2}]_{d'};
wobei jedes R¹ eine unabhängig ausgewählte Hydrocarbylgruppe ist; n 0, 1, 2 oder 3 ist, m 0, 1 oder 2 ist, mit der Maßgabe, dass n und m nicht gleichzeitig 0 sind; 0 < a' < 1; 0 < b' < 1; 0 ≤ c' ≤ 0,1; und 0 ≤ d' ≤ 0,1, mit der Maßgabe, dass a'+b'+c'+d'=1.

4. Zusammensetzung nach Anspruch 1 oder 2, wobei das (C) Organopolysiloxan die folgende durchschnittliche Einheitsformel (I) oder (II) aufweist:
[R¹₃₋ₙ(OH)ₙSiO_{1/2}]_{a"}[R¹₂₋ₘ(O^{H})ₘSiO_{2/2}]_{b"} (I)
wobei jedes R¹ eine unabhängig ausgewählte Hydrocarbylgruppe ist; n 0, 1, 2 oder 3 ist, m 0, 1 oder 2 ist, mit der Maßgabe, dass n und m nicht gleichzeitig 0 sind; 0 < a" < 1; 0 < b" < 1; mit der Maßgabe, dass a"+b"=1; oder
R¹₃₋ₓ(OH)ₓSiO[SiR¹₂O]_{c"}Si(OH)_{y}R¹_{3-y} (II)
wobei jedes R¹ eine unabhängig ausgewählte Hydrocarbylgruppe ist; x 0, 1, 2 oder 3 ist, y 0, 1, 2 oder 3 ist, mit der Maßgabe, dass x und y nicht gleichzeitig 0 sind; und c" von 60 bis 1.200 ist.

5. Zusammensetzung nach einem der vorstehenden Ansprüche, wobei das (C) Organopolysiloxan in einer Menge von 0,1 bis 2,5 Gew.-% vorhanden ist.

6. Zusammensetzung nach einem der vorstehenden Ansprüche, wobei der Mineralfüllstoff ausgewählt ist aus Calciumcarbonat, Talkum und Kombinationen davon.

7. Zusammensetzung nach einem der vorstehenden Ansprüche, ferner umfassend ein oder mehrere Additive, ausgewählt aus einem Farbmittel, einem Treibmittel, einem UV- und/oder Lichtstabilisator, einem Verarbeitungshilfsmittel, einem Konservierungsmittel, einem Biozid, einem Flammschutzmittel und/oder Rauchgasunterdrücker, einem Schlagzähigkeitsmodifizierer; einem Wärmestabilisator und einem Schmiermittel.

8. Verfahren zum Herstellen der Zusammensetzung nach einem der Ansprüche 1 bis 7, das Verfahren umfassend:
Kombinieren (A) des Mineralfüllstoffs, (B) des Polyvinylchloridpolymers und (C) des Organopolysiloxans, wobei dadurch die Zusammensetzung hergestellt wird.

9. Verfahren zum Herstellen eines Polymerkompositerzeugnisses, das Verfahren umfassend:
Herstellen des Polymerkompositerzeugnisses aus der Zusammensetzung nach einem der Ansprüche 1 bis 7.

10. Verfahren nach Anspruch 9, wobei das Verfahren umfasst:
Kombinieren des (A) Mineralfüllstoffs, des (B) Polyvinylchloridpolymers und des (C) Organopolysiloxans bei einer erhöhten Temperatur unter Mischen, um eine fließfähige Mischung zu ergeben; Ausbilden des Polymerkompositerzeugnisses aus der fließfähigen Mischung.

11. Verfahren nach Anspruch 10, wobei: (i) das (C) Organopolysiloxan eine Flüssigkeit ist, wenn die fließfähige Mischung mit dem (C) Organopolysiloxan kombiniert wird.

12. Verfahren nach einem der Ansprüche 9 bis 11, wobei: (i) das Herstellen des Polymerkompositerzeugnisses aus der Zusammensetzung ferner das Ausbilden der Zusammensetzung in eine gewünschte Form umfasst; (ii) das Herstellen des Polymerkompositerzeugnisses aus der Zusammensetzung ein Extrudieren der Zusammensetzung umfasst; (iii) das Herstellen des Polymerkompositerzeugnisses aus der Zusammensetzung ein Formen der Zusammensetzung umfasst; oder (iv) beliebige Kombinationen von (i) bis (iii).

13. Verfahren nach einem der Ansprüche 9 bis 12, das in einem Extruder ausgeführt wird, wobei: (i) eine Extrusionsverarbeitungstemperatur der Zusammensetzung in dem Extruder verglichen mit einer Extrusionsverarbeitungstemperatur einer Mischung des (A) Mineralfüllstoffs und des (B) Polyvinylchloridpolymers ohne das (C) Organopolysiloxan verringert wird; und/oder (ii) ein Drehmoment des Extruders, wenn die Zusammensetzung gemischt wird, verglichen mit einem Drehmoment des Extruders verringert wird, wenn eine Mischung des (A) Füllstoffs und des (B) Polymers ohne das (C) Organopolysiloxan extrudiert wird.

14. Polymerkompositerzeugnis, das durch das Verfahren nach einem der Ansprüche 8 bis 13 hergestellt wird.

15. Polymerkompositerzeugnis nach Anspruch 14, wobei das Erzeugnis aus der Gruppe ausgewählt ist, bestehend aus Dachunterkonstruktion, Geländern, Fassadenverkleidungen, Zäunen, Fensterrahmen, Bodenbelägen, Fliesen und Sockelleisten.

## Revendications

1. Composition de poly(chlorure de vinyle) permettant de préparer un article composite polymère, ladite composition comprenant :
(A) une charge minérale en une quantité allant de 50 à 70 % en poids ;
(B) un polymère de poly(chlorure de vinyle) en une quantité allant de 25 à moins de 50 % en poids, dans laquelle la quantité de la charge minérale (A) est supérieure à la quantité du polymère de poly(chlorure de vinyle) (B) ; et
(C) un organopolysiloxane en une quantité de plus de 0 à 5 % en poids ; l'organopolysiloxane (C) ayant au moins un groupe hydroxyle lié au silicium et une viscosité allant de 1 000 à 60 000 mPa·s à 25 °C, dans laquelle la viscosité est mesurée à 25 °C à des tours/minute allant de 0,1 à 50 sur un viscosimètre à cône et à plaque Brookfield DV-III avec un mobile #52 ;
chacun sur la base du poids total des composants (A), (B) et (C) dans ladite composition.

2. Composition selon la revendication 1, dans laquelle : (i) ledit organopolysiloxane (C) est présent sous forme de liquide à 25 °C ; (ii) ledit organopolysiloxane (C) a une viscosité allant de 2 000 à 50 000 mPa·s à 25 °C ; ou (iii) une combinaison de (i) et (ii).

3. Composition selon la revendication 1 ou 2, dans laquelle ledit organopolysiloxane (C) a la formule unitaire moyenne suivante :
[R¹₃₋ₙ(OH)ₙSiO_{1/2}]_{a'}[R¹₂₋ₘ(OH)ₘSiO_{2/2}]_{b'}[R¹SiO_{3/2}]_{c'}[SiO_{4/2}]_{d'};
dans laquelle chaque R¹ est un groupe hydrocarbyle choisi indépendamment ; n vaut 0, 1, 2 ou 3, m vaut 0, 1 ou 2, à condition que n et m ne valent pas simultanément 0 ;0 < a' < 1 ;0 < b' < 1 ;0 ≤ c' ≤ 0,1 ; et 0 ≤ d' ≤ 0,1, à condition que a' + b' + c' + d' = 1.

4. Composition selon la revendication 1 ou 2, dans laquelle ledit organopolysiloxane (C) a la formule unitaire moyenne (I) ou (II) suivante :
[R¹₃₋ₙ(OH)ₙSiO_{1/2}]_{a"}[R¹₂₋ₘ(OH)ₘSiO_{2/2}]_{b"} (1)
dans laquelle chaque R¹ est un groupe hydrocarbyle choisi indépendamment ; n vaut 0, 1, 2 ou 3, m vaut 0, 1 ou 2, à condition que n et m ne valent pas simultanément 0 ; 0 < a" < 1 ; 0 < b" < 1 ; à condition que a" + b" = 1 ; ou
R¹₃₋ₓ(OH)ₓSiO[SiR¹₂O]_{c"}Si(OH)_{y}R¹_{3-y} (II)
dans laquelle chaque R¹ est un groupe hydrocarbyle choisi indépendamment ; x vaut 0, 1, 2 ou 3, y vaut 0, 1, 2 ou 3, à condition que x et y ne valent pas simultanément 0 ; et c" vaut de 60 à 1 200.

5. Composition selon l'une quelconque revendication précédente, dans laquelle : ledit organopolysiloxane (C) est présent en une quantité allant de 0,1 à 2,5 % en poids.

6. Composition selon l'une quelconque revendication précédente, dans laquelle la charge minérale est choisie parmi du carbonate de calcium, du talc, et des combinaisons de ceux-ci.

7. Composition selon l'une quelconque revendication précédente, comprenant en outre un ou plusieurs additifs choisis parmi un colorant, un agent gonflant, un stabilisateur d'UV et/ou de lumière, un auxiliaire de traitement, un conservateur, un biocide, un retardateur de flamme et/ou un suppresseur de fumée, un modificateur d'impact ; un stabilisant thermique, et un lubrifiant.

8. Procédé de préparation de la composition selon l'une quelconque des revendications 1 à 7, ledit procédé comprenant :
la combinaison de ladite charge minérale (A), dudit polymère de poly(chlorure de vinyle) (B), et dudit organopolysiloxane (C), permettant ainsi de préparer la composition.

9. Procédé de préparation d'un article composite polymère, ledit procédé comprenant :
la préparation de l'article composite polymère à partir de la composition selon l'une quelconque des revendications 1 à 7.

10. Procédé selon la revendication 9, dans lequel le procédé comprend :
la combinaison de la charge minérale (A), du polymère de poly(chlorure de vinyle) (B), et de l'organopolysiloxane (C) à une température élevée en mélangeant afin d'obtenir un mélange apte à s'écouler ; et la formation de l'article composite polymère à partir du mélange apte à s'écouler.

11. Procédé selon la revendication 10, dans lequel : (i) l'organopolysiloxane (C) est un liquide lors de la combinaison du mélange apte à s'écouler avec l'organopolysiloxane (C).

12. Procédé selon l'une quelconque des revendications 9 à 11, dans lequel : (i) la préparation de l'article composite polymère à partir de la composition comprend en outre le façonnage de la composition en une forme souhaitée ; (ii) la préparation de l'article composite polymère à partir de la composition comprend l'extrusion de la composition ; (iii) la préparation de l'article composite polymère à partir de la composition comprend le moulage de la composition ; ou (iv) toutes combinaisons de (i) à (iii).

13. Procédé selon l'une quelconque des revendications 9 à 12 mis en œuvre dans une extrudeuse, dans lequel : (i) une température de traitement par extrusion de la composition dans l'extrudeuse est réduite par rapport à une température de traitement par extrusion d'un mélange de la charge minérale (A) et du polymère de poly(chlorure de vinyle) (B) sans l'organopolysiloxane (C) ; et/ou (ii) un couple de l'extrudeuse est réduit lors du mélange de la composition par rapport à un couple de l'extrudeuse lors de l'extrusion d'un mélange de la charge (A) et du polymère (B) sans l'organopolysiloxane (C).

14. Article composite polymère préparé par le procédé selon l'une quelconque des revendications 8 à 13.

15. Article composite polymère selon la revendication 14, dans lequel l'article est choisi dans le groupe constitué de terrasses, rampes, bardages, clôtures, encadrements de fenêtres, revêtements de sol, carreaux, et plinthes.
